# EUROPEAN PATENT APPLICATION

(11) **EP 4 390 017 A1**
(43) Date of publication of application: **26.06.2024**
(21) Application number: 22315351.1
(22) Date of filing: 22.12.2022
(51) Int. Cl.: E05B 79/20, E05B 85/02, E05B 79/08

(54) **LATCH DEVICE COMPRISING GUIDING MEAN FOR A CABLE**

(71) Applicant: Minebea AccessSolutions France, 94140 Alfortville (FR)
(72) Inventor: Debroucke, François, 80100 Abbeville (FR); Verbrugghe, Jean-Marc, 80100 Abbeville (FR)
(74) Representative: Innovincia

(57) **Abstract**

The present invention refers to a latch device (2) for an opening panel for a vehicle, said latch device (2) comprising at least one opening lever (4) configured to open the latch and at least one cable (6), the cable (6) being connected on one hand to an opening mean and on the other hand to the opening lever (4), characterized in that the latch device (2) comprises a housing (8) with an integrated guide groove (10) configured to slidably receive therein the cable (6) and to guide the cable (6) in motion when it is being pulled on.

## Description

### TECHNICAL FIELD

The present invention relates to the field of latch devices for an opening panel for a motor vehicle and in particular to latch devices comprising a cable, such as a Bowden cable, which is configured to transmit mechanical force or energy by the movement of this cable.

### BACKGROUND OF THE INVENTION

In motor vehicles, the mechanical connection to the opening means such as door handles is operated by cables. In the vehicle door latch devices of the state of the art, these cables are usually guided with sheaths. Sheath stops are usually necessary to connect the cable to the lock or to the opening means. The path followed by the cable may be winding and curved. The change in direction along said path can be in the form of one or more bends with angles of between a few degrees and 90 degrees. Curved sheath portions are usually used to direct the cable path. Also, when a pull is exerted on the cable, the direction of the pull may change. The sheath portions allow the direction of the cable exit to be reoriented.

However, these sheath portions, especially the curved sheath portions, are complex to manufacture, so the cost of manufacturing is high. These sheath portions also have the disadvantage of consuming a lot of volume in terms of packaging, which penalises their integration within the assembly. Such state-of-the-art-examples show that these embodiments of latch devices require parts which are expensive to manufacture and which add complexity to the latch device, while also taking up a lot of space.

Moreover, pulling the internal wire of the Bowden cable through the curved sheath portions generates a lot of friction, which contributes to an increase in the required pulling force and causes premature wear of the parts. Limiting friction helps protecting the parts of the door lock assembly from unusual wear and also ensures a safe functioning of the latch device in particular and the door lock mechanism in general.

### SUMMARY OF THE INVENTION

It is therefore a goal of the present invention to overcome at least partially the previous drawbacks of the state of the art and to provide a more affordable solution with less parts that helps avoiding friction leading to premature wear and to potential damage of the latch device without making it more expensive.

Thus, the present invention refers to a latch device for an opening panel for a vehicle, said latch device comprising at least one opening lever configured to open the latch and at least one cable, the cable being connected on one hand to an opening mean and on the other hand to the opening lever, characterized in that the latch device comprises a housing with an integrated guide groove configured to slidably receive therein the cable and to guide the cable, in motion when it is being pulled on.

According to a further aspect of the invention, the guide groove has a curved profile which presents variable radii of curvature.

According to a further aspect of the invention, the guide groove has a variable cross-section.

According to a further aspect of the invention, at least one mouthpiece of the guide groove is funnel-shaped.

According to a further aspect of the invention, the housing presents a portion which forms the integrated guide groove of the latch device.

According to a further aspect of the invention, the guide groove is an insert configured to be inserted into the housing.

According to a further aspect of the invention, the guide groove comprises a wall with at least one opening configured to receive a tooth that protrudes from a neighbouring part such as the housing so as to position the guide groove inside the housing.

According to a further aspect of the invention, the guide groove can be inserted into the housing so as to form a tile structure.

### BRIEF DESCRIPTION OF THE DRAWINGS

FIG.1 is a perspective view of a vehicle door lock casing comprising a latch device;
FIG.2 is a perspective view of the latch device in Fig.1;
FIG.3 is a perspective view of a guide groove;
FIG.4A is a perspective view of a guide groove with a cable in a first position;
FIG.4B is a similar view to Fig.4A with a cable in a second position;
FIG.5 is a detailed view of the vehicle door lock casing in Fig.1.

### DETAILED DESCRIPTION OF THE INVENTION

The following achievements are examples. Although the specification refers to one or several embodiments, it does not imply that each reference refers to the same embodiment or that the features apply only to a single embodiment. Simple features of different embodiments can also be combined to provide other embodiments. In the following description, certain items can be indexed, as the first item or second item. This is a simple indexing to differentiate and name similar but not identical elements. This indexing does not imply a priority of one element over another and such names can easily be interchanged without going beyond the scope of the present description. Nor does this indexing imply an order in time.

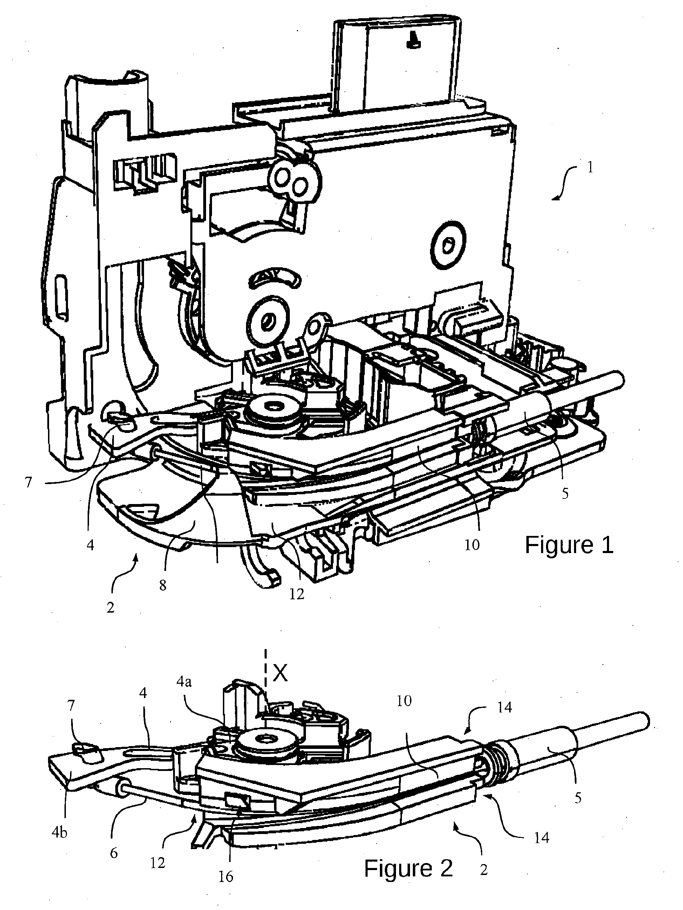

Fig.1 is a schematic view of a vehicle door lock casing 1 comprising a latch device 2 for an opening panel for a vehicle. The opening panel is not shown in Fig.1. The latch device 2 comprises at least one opening lever 4 configured to open the latch and at least one cable 6. The cable 6 is connected on one hand to an opening mean and on the other hand to the opening lever 4. The opening mean is not shown in Fig.1. Part of the cable 6 is hidden in a straight sheath portion 5 which is visible in figures 1, 2, 4A and 4B. The cable 6 may be a Bowden cable for instance.

One tip of the cable 6, which is not hidden in the straight sheath portion 5, can be assembled to a plug 7, as shown in figures 1, 2, 4A and 4B. The plug 7 itself is then connected to the opening lever 4 of the latch device 2. The plug 7 ensures a reliable and durable connection between the tip of the cable 6 and the opening lever 4. The plug 7 may have an L-shape, an S-shape or a hook shape, as illustrated in the figures.

The opening lever 4 is configured to pivot around an axis of rotation X, as illustrated in Fig.2. In the embodiment shown in Figure 2, a first end 4a of the opening lever 4 is configured to be brought into relationship with the axis of rotation X while a second end 4b of the opening lever 4, opposite to the first end 4a, is connected to the plug 7 located on the tip of the cable 6.

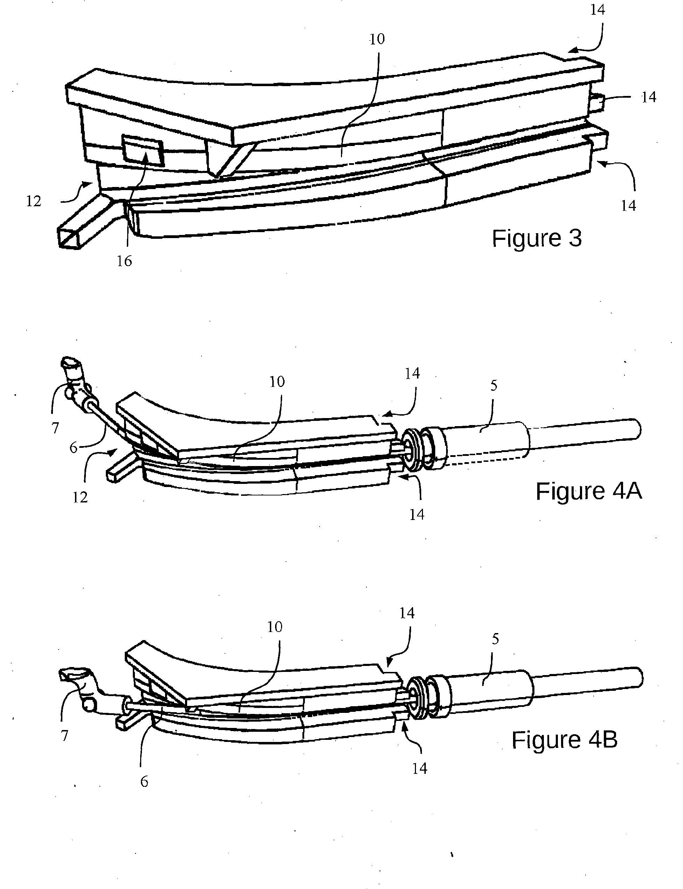

When a user activates the opening mean (not shown in the figures), which may be a handle lever or a pilot-operated linkage for instance, at least a part of the opening mean is driven in motion so as to exert a pull on the cable 6. The pull on the cable 6 moves said cable 6 through the sheath portion 5 and also drives in motion the opening lever 4 around the axis of rotation X. When the opening lever 4 pivots around the axis of rotation X, the direction of the tensile force exerted on the cable 6 changes over time, which means that the cable 6 does not perform a simple translational movement, but a more complex movement in space. This is for instance illustrated in Fig.4A and Fig.4B. In Fig.4A, a longer portion of the cable 6 is protruding from the sheath portion 5 then in Fig.4B. Moreover, the direction in which the protruding portion of the cable 6 is oriented is not the same in Fig.4A and Fig.4B.

In order to guide the cable 6 in the course of its motion, the latch device 2 further comprises a housing 8 (visible in Fig.1) with an integrated guide groove 10, which is visible in all the figures. The guide groove 10 is configured so as to slidably receive therein the cable 6. The guide groove 10 is configured to guide the cable 6 in motion when it is being pulled on. In contrast to the sheath portion 5 that surrounds the cable 6 on all sides, the integrated guide groove 10 has at least one open side, which gives more visibility. This visibility also saves time during any visual inspection steps during assembly or maintenance. The open side of the guide groove 10 also allows easy access to cable 6, making it easier to check on it or to replace it if needed.

The open side of the guide groove 10 may be located on its upper side, as illustrated in the figures. According to a different embodiment (not illustrated in the figures), the open side of the guide groove 10 may be located on a lateral side. If the open side is located on a lateral side of the guide groove 10, the depth and/or the width of the guide groove 10 may have to be adapted so as to offer a similar freedom of movement for the cable 6 as when the open side is located on the upper side of the guide groove 10. More specifically, the depth and/or the width of the end portion of the guide groove 10 may be slightly larger than in the embodiment where the open side is located on the upper side of the guide groove 10.

Thanks to the presence of such a guide groove 10, there is no longer any need to use curved sheath stops. Straight sheath portions 5 may still be used for sections in which the cable 6 is mostly pulled along a same direction over time. Using a guide groove 10 and eventually some straight sheath portions 5 allows using a single cable type, which makes it both easier and less expensive to assemble within the latch device 2.

The guide groove 10 may have a curved profile which presents variable radii of curvature. More specifically, the guide groove 10 may present various curved portions with distinct radii of curvature from one another. For instance, the cable 6 may adopt a rest position in which part of said cable is pressed inside the guide groove 10 so as to fit the radius of curvature of the guide groove 10. The smaller the radius of curvature is, the bigger the contact surface between the cable 6 and the guide groove 10 becomes. A small radius of curvature maximizes the contact surface between the cable 6 and the guide groove 10 and ensures that the cable 6 is safely positioned within the guide groove 10. Therefore, at least one end of the guide groove 10 may present a small radius of curvature, so as to assure a secured fit of the cable 6 when it adopts its rest position.

The size of the contact surface between the cable 6 and the guide groove 10 also depends on the movement of the cable 6 therein. The various curved portions of the guide groove 10 influence the radius of curvature adopted by the cable 6 as it moves through the guide groove 10. Once the cable 6 is being pulled, it is favorable to reduce the contact surface between the cable 6 and the guide groove 10 in order to limit the friction between these parts. A small radius of curvature may generate a lot of friction when the cable 6 rubs against the inner walls of the guide groove 10. Therefore, a middle section of the guide groove 10 may present a larger radius of curvature, which makes it possible to reduce the contact surface between the cable 6 and the guide groove 10 when said cable 6 is being pulled along the guide groove 10. Generally speaking, the variable radii of curvature offer greater geometric variety of the guide groove 10, which can facilitate the overall architecture of the latch device 2. This can contribute to the compactness of the latch device 2.

The variable radii of curvature also ensure the redirection of the tensile force exerted on the cable 6 within the guide groove 10 in a different direction. The cable 6 arranged inside the guide groove 10 is thus guided in its trajectory so as to follow the radii of curvature while limiting friction. The reduction in friction between the cable 6 and its environment contributes to a reduction in wear and tear on parts, which can result in a longer service life for the mechanism and a lower release force.

The guide groove 10 may present a variable cross-section. In other words, the width and/or depth of the guide groove 10 can vary from one section to another so as to provide a larger or narrower accommodation for the cable 6 arranged therein. This allows for a greater range of motion, which gives the cable 6 more freedom of movement in space as it is being pulled, without loss of guidance quality. A variable cross-section of the guide groove 10 also allows for less friction between the cable 6 and its environment.

According to a specific embodiment of the guide groove, at least on mouthpiece 12 of the guide groove 10 may be funnel-shaped. Such a mouthpiece 12 is for instance illustrated in the figures 3, 4A, 4B and 5. A funnel-shaped mouthpiece 12 of the guide groove 10 allows for a greater range of motion for the cable 6 when exiting the guide groove 10. The shape of a funnel also helps in reducing friction. As explained earlier, the reduction in friction between the cable 6 and its environment contributes to a reduction in wear and tear on parts, which can result in a longer service life for the mechanism.

According to a specific embodiment of the latch device 2, its housing 8 presents a portion which forms the integrated guide groove 10 of the latch device 2. In other words, the housing 8 comprises internal walls which form the guide groove 10, which is configured to slidably receive therein the cable 6. In this specific embodiment, the housing 8 and the guide groove 10 can be manufactured simultaneously in the same manufacturing process, such as a moulding manufacturing process for instance.

According to an alternative embodiment, the guide groove 10 may be an insert configured to be inserted into the housing 8. This specific embodiment of the guide groove 10 is for instance illustrated in figures 1 through 5. In other words, the guide groove 10 is a separate part which needs to be assembled to the housing 8. This may allow a different manufacturing process to be used for the guide groove 10 than that used for the housing 8, or a different material to be chosen for the guide groove 10 than that chosen for the housing 8. This alternative embodiment also allows the geometry of the guide groove 10 to be more complex.

In this specific embodiment, the guide groove 10 may present at least one notch 14 that allows the guide groove 10 to be quickly installed in the latch device 2. The at least one notch 14 can also help the guide groove 10 to be reliably and permanently held in position in the latch device 2. The assembly can for example be done by snapping together the guide groove 10 and the housing 8.

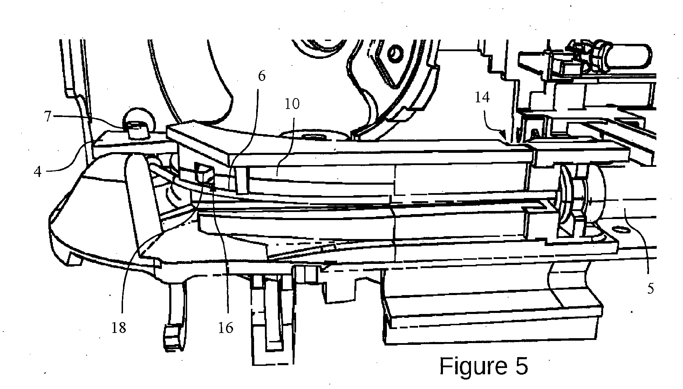

In this specific embodiment, the guide groove 10 may be inserted into the housing 8 so as to form a tile structure, meaning that the extremity of one end of the guide groove 10 forms a layered contact surface with the housing 8. This is for instance shown in detail in Fig.5. Such a tile structure ensures a good seal of the assembly by making it waterproof. The layered contact surface between the guide groove 10 and the housing 8 formed by the tile structure also protects the cable 6.

The guide groove 10 may comprise a wall with at least one opening 16 configured to receive a tooth 18 that protrudes from a neighbouring part such as the housing 8 so as to position the guide groove 10 inside the housing 8. This specific embodiment is illustrated in Fig.5. The opening 16 may have a round or polygonal shape. In the embodiment illustrated in Fig.5, the opening 16 has a rectangular shape. The insertion of the tooth 18 into the opening 16 helps to position the guide groove 10 inside the housing 8 of the latch device 2 and it also ensures that the assembly is held in position.

It is therefore possible to provide a latch device for an opening panel for a vehicle with a less complex design that involves fewer parts and that requires less space.

## Claims

1. Latch device (2) for an opening panel for a vehicle, said latch device (2) comprising at least one opening lever (4) configured to open the latch and at least one cable (6), the cable (6) being connected on one hand to an opening mean and on the other hand to the opening lever (4), **characterized in that** the latch device (2) comprises a housing (8) with an integrated guide groove (10) configured to slidably receive therein the cable (6) and to guide the cable (6) in motion when it is being pulled on.

2. Latch device (2) according to the preceding claim, **characterized in that** the guide groove (10) has a curved profile which presents variable radii of curvature.

3. Latch device (2) according to any of the preceding claims, **characterized in that** the guide groove (10) has a variable cross-section.

4. Latch device (2) according to any of the preceding claims, **characterized in that** at least one mouthpiece (12) of the guide groove (10) is funnel-shaped.

5. Latch device (2) according to any of the preceding claims, **characterized in that** the housing (8) presents a portion which forms the integrated guide groove (10) of the latch device (2).

6. Latch device (2) according to any of claims 1 to 4, **characterized in that** the guide groove (10) is an insert configured to be inserted into the housing (8).

7. Latch device (2) according to claim 6, **characterized in that** the guide groove (10) comprises a wall with at least one opening (16) configured to receive a tooth (18) that protrudes from a neighbouring part such as the housing (8) so as to position the guide groove (10) inside the housing (8).

8. Latch device (2) according to claim 6 or 7, **characterized in that** the guide groove (10) can be inserted into the housing (8) so as to form a tile structure.
